Europäisches Patentamt

European Patent Office

Office européen des brevets

(11) Publication number: **0 117 604**
**B1**

# (12) EUROPEAN PATENT SPECIFICATION

(45) Date of publication of patent specification: **24.10.90**

(21) Application number: **84300191.8**

(22) Date of filing: **12.01.84**

(51) Int. Cl.⁵: **G 02 F 1/05, G 02 F 1/055**

(54) Electro-optical light shutters.

(30) Priority: **14.01.83 JP 4513/83**

(43) Date of publication of application:
**05.09.84 Bulletin 84/36**

(45) Publication of the grant of the patent:
**24.10.90 Bulletin 90/43**

(84) Designated Contracting States:
**DE FR GB NL**

(56) References cited:
**GB-A-1 347 188**
**US-A-3 623 795**
**US-A-3 990 770**
**US-A-4 154 505**
**US-B-3 998 523**

(73) Proprietor: **SONY CORPORATION**
**7-35 Kitashinagawa 6-Chome Shinagawa-ku**
**Tokyo 141 (JP)**

(72) Inventor: **Murano, Kanji c/o Patent Division**
**Sony Corporation 7-35 Kitashinagawa-6**
**Shinagawa-ku Tokyo (JP)**
Inventor: **Nishigaki, Susumu c/o Patent Division**
**Sony Corporation 7-35 Kitashinagawa-6**
**Shinagawa-ku Tokyo (JP)**
Inventor: **Himuro, Masami c/o Patent Division**
**Sony Corporation 7-35 Kitashinagawa-6**
**Shinagawa-ku Tokyo (JP)**
Inventor: **Watanabe, Yoshihisa c/o Patent**
**Division**
**Sony Corporation 7-35 Kitashinagawa-6**
**Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

**Description**

This invention relates to electro-optical light shutters.

The use of so-called PLZT transparent ceramics, that is (Pb, La)(Zr, Ti)O₃ ceramics has been proposed for such shutters.

In general, a PLZT ceramic has the following advantages:

(i) it is transparent;

(ii) its optical characteristic can be controlled electrically; and

(iii) its electro-optical constant is large, and an element can be formed with ease and at low manufacturing cost.

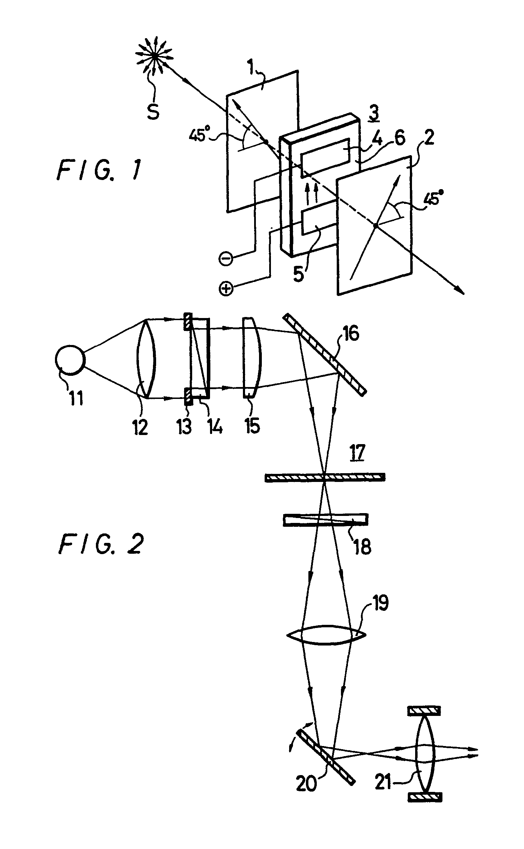

Figure 1 of the accompanying drawings is a diagram showing the basic construction of a PLZT electro-optical light shutter apparatus. The apparatus comprises linear polarizers 1 and 2 between which an electrooptical light shutter 3 including a PLZT ceramics plate 6 is disposed. The electro-optical light shutter 3 comprises a pair of electrodes 4 and 5 disposed on the PLZT plate 6. The linear polarizers 1 and 2 are disposed in such a manner that the electric field vector directions of the linearly polarized light selected thereby are perpendicular to each other. The PLZT plate 6 is disposed in such a manner that its electric field direction, namely, the optical axis direction is at 45° to each of the former directions. With such an arrangement, when light from a light source S the electric field of which orients in every directions is passed through the linear polarizer 1, the light becomes linearly polarized light. The intensity of the linearly polarized light passing through the linear polarizer 1 is in theory reduced to half that of the incident light. As the linearly polarized light passing through the linear polarizer 1 advances through the PLZT plate 6, the electric field vector of the polarized light is rotated depending on the voltage applied to the PLZT plate 6 and the plate thickness. If the condition that the electric field vector is rotated by 90° is set, the linearly polarized light emitted from the PLZT plate 6 passes through the linear polarizer 2. When no voltage is applied to the PLZT plate 6, the light is in the crossed-nicols condition, so that the light cannot pass through the linear polarizer 2, namely, the shutter 3 is in the off state, while when a predetermined voltage is applied to the PLZT plate 6, the light can pass through the shutter 3, namely the shutter 3 is in the on state. Thus, by controlling the voltage applied to the shutter 3, an electro-optical shutter function can be performed.

Such a PLZT electro-optical shutter has advantages such as high speed, with a response time of microsecond order; it can be made as a full solid state structure; it has long life; and high reliability. Accordingly, such PLZT electro-optical shutters have been proposed, for use as a flash brightness prevention shutter, in a viewer in a stereoscopic television system, in a colour television receiver employing a black and white television picture tube as disclosed in Japanese Unexamined Patent Publication No. 57/55685, and in a high brightness projector.

The colour television receiver disclosed in the above Japesen patent publication No. 57/55685 will now be briefly described. At the external side of a face plate of a black and white (monochromatic) television picture tube is disposed a parallel stripe filter formed of red, green and blue colour stripes, each extending in, for example, the vertical direction. Electro-optical shutter elements are disposed at each stripe in opposing relation to the filter. In response to the scanning position of the electron beam at each horizontal scanning line of the picture tube, the electron beams are modulated by the colour signals corresponding to red, green and blue colours, and the respective electro-optical shutter element associated with each stripe is alternately made on and off in synchronism therewith. Thus, the optical image of each of the red, green and blue colours is produced through each stripe filter, and hence a reproduced colour image can be obtained.

Figure 2 of the accompanying drawings shows an example of the construction of a high brightness projector to which such a PLZT electro-optical shutter array can be applied. Also in this case, when each element of the electro-optical light shutter array is made on and off, a picture of one horizontal scanning line is formed sequentially. In this case, the light emitted from a light source 11 is projected through a collimator lens 12, an iris 13, a linear polarizer 14, a lens system 15 and a mirror 16 to an electro-optical light shutter 17. The light projected onto the shutter 17 is formed by the iris 13 and the lens system 15 into light flux of a slit-shape perpendicular to the plane of Figure 2. The shutter 17 comprises PLZT elements which are disposed in stripe shape on a plane at the position irradiated by light flux of slit shape. Then, in response to the video signal of one horizontal scanning line, each PLZT element is sequentially turned on and off and the light passed therethrough is projected through an analyzer 18, a condenser lens 19, a movable mirror 20 and a projection lens 21 onto a screen (not shown). In this case, the linear polarizer 14 and the analyzer 18 respectively correspond to the linear polarizers 1 and 2 in Figure 2. The movable mirror 20 is driven or vibrated along the surface of the sheet in Figure 2, namely, in the horizontal direction shown by arrows, at, for example, one field period. When a video signal of one horizontal scanning line is sequentially supplied to each element of the shutter 17 and the movable mirror 20 is driven at each field period in synchronism therewith, a picture of one field is sequentially projected onto the screen.

In the colour television receiver formed by the combination of the monochromatic cathode ray tube and the electro-optical shutter or the high brightness projector employing the electro-optical shutter, the driving of the shutter is carried out at a driving frequency higher than 5 kHz.

PLZT ceramic is formed of a mixed system of PbZrO₃, PbTiO₃ and La₂O₃ and the composition formula thereof is expressed by

$$(Pb_{(1-x)}La_x)((Zr_yTi_z)_{(1-x/4)})O_3$$

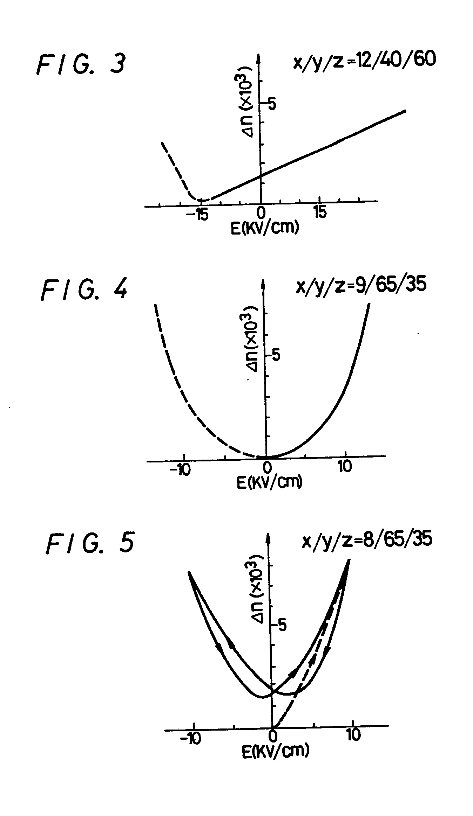

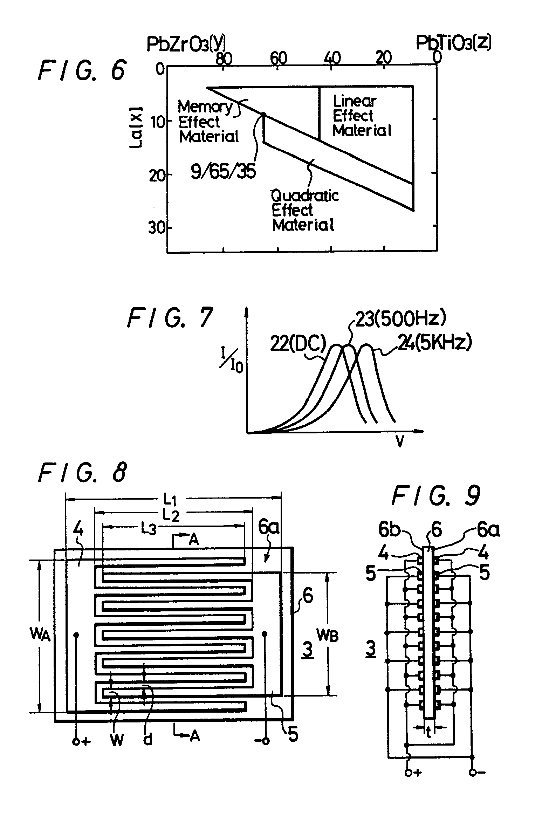

Since its composition is determined by the amounts of La, Zr and Ti, its composition can be expressed by x/y/z. In accordance with the composition ratio x/y/z, the PLZT ceramic is roughly classified into a linear electro-optical effect material which shows Pockels effect as a mode of birefringence caused by electro-optical effect, quadratic electro-optical effect material which shows Kerr effect, and a memory material which shows memory effect. When an electric field is applied to the electro-optical effect material, it exhibits anisotropy in permittivity and birefringence $\Delta_n$. However, if the electric field is removed therefrom, anisotropy in refractive index disappears and it becomes isotropic. On the contrary, with the linear electro-optical effect material and the memory material, even if the electric field is removed therefrom, anisotropy remains. A relation between the birefringence $\Delta_n$ and the electric field E of each material is as shown in Figures 3 to 5 of the accompanying drawings. These characteristics are shown at room temperature. Figure 3 shows a case of the linear electro-optical effect material with the composition x/y/z=12/40/60, Figure 4 shows a case of the quadratic electro-optical effect material with the composition x/y/z=9/65/35, and Figure 5 shows a case of the memory material which has the memory effect with the composition x/y/z=8/65/35. Figure 6 of the accompanying drawings shows the ranges of the compositions circled by the solid lines which form the memory effect material, the linear electro-optical effect material and the quadratic electro-optical effect material each having a composition of x/y/z.

Hitherto, PLZT ceramics for electro-optical light shutters have been selected to have a composition of 9.5 to 9.0/65/35 for quadratic electro-optical effect. The reason for this is that the PLZT ceramics having the above composition can exhibit the quadratic effect at ambient temperatures ranging from −20°C to 80°C, and can be used in an electro-optical light shutter. However, the temperature characteristic of the quadratic electro-optical coefficient R of the PLZT ceramics has a large negative value, so that in the use at temperatures higher than room temperature the operating voltage is raised and hence the operating electric power is increased, and moreover discharge may occur between the electrodes, so resulting in problems in use.

On the other hand, when a PLZT shutter is driven by alternating current, the operating voltage is increased as its frequency is increased. In the graph of Figure 7 of the accompanying drawings, curves 22, 23 and 24 indicate operating voltage versus output I/I₀ (where I₀ represents the incident light intensity and I represents the detected light intensity) for D.C., 500 Hz and 5 kHz operation.

US patent specification US—A—3 998 523 discloses an electro-optical PLZT ceramic material which has utility for electro-optical applications as it can be switched between a ferroelectric phase and a paraelectric (antiferroelectric) phase. The material has a memory effect at room temperature and loses the memory effect at an elevated temperature caused by the application of an A.C. voltage. US patent specification US—A—4 154 505 discloses the application of a PLZT ceramic material capable of low voltage operation, to a light shutter device.

According to the present invention there is provided an electro-optical light shutter comprising:

a ceramic body exhibiting an electro-optical effect consisting in the dependency of the optical anisotropy of the body upon an electric field applied to the body;

means for applying an A.C. voltage to said ceramic body to control said electro-optical effect in said ceramic body;

first polarizing means to cause linearly polarized light to be incident on said ceramic body; and

second polarizing means either to intercept or to transmit the light passed through said ceramic body; characterised in that:

said ceramic body is formed of PLZT ceramic which has a memory effect resulting in the persistence of the anisotropy caused by an electric field after removal of the electric field at room temperature and which loses said memory effect and exhibits a quadratic electro-optical effect at a predetermined elevated operating temperature, and in that the means for applying the A.C. voltage is arranged to provide an A.C. voltage which results in heating of said ceramic body to said elevated temperataure.

According to the present invention there is also provided an electro-optical light shutter comprising:

a ceramic body exhibiting an electro-optical effect consisting in the dependency of the optical anisotropy of the body upon an electric field applied to the body;

means for supplying an A.C. voltage to said ceramic body to control said electro-optical effect in said ceramic body;

first polarizing means to cause linearly polarized light to be incident on said ceramic body; and

second polarizing means either to intercept or to transmit the light passed through said ceramic body; characterised by:

means for holding said ceramic body at a predetermined elevated operating temperature;

said ceramic body being formed of PLZT ceramic which has a memory effect at room temperature and which loses said memory effect and exhibits a quadratic electro-optical effect at said predetermined elevated operating temperature;

said means for holding said ceramic body at said predetermined elevated operating temperature comprising said means for applying said A.C. voltage and additional separately controlled heating means.

The invention will now be described by way of example with reference to the accompanying drawings, throughout which like parts are referred to by like references, and in which:

3

Figure 1 is a diagram of an electro-optical light shutter;

Figure 2 is a diagram showing an example of a projector which employs an electro-optical light shutter;

Figures 3 to 7 are graphs showing characteristics of PLZT ceramics;

Figure 8 is a schematic plan view illustrating an embodiment of electro-optical light shutter according to the present invention;

Figure 9 is a cross-sectional view taken along a line A—A in Figure 8;

Figure 10 is a graph showing the relation between PLZT composition and a memory temperature;

Figure 11 is a graph showing measured results of the temperature dependency of a quadratic electro-optical coefficient R of a PLZT ceramic;

Figure 12 is a graph showing measured results of a temperature dependency of a half-wave voltage; and

Figure 13 is a diagram showing part of the embodiment of electro-optical light shutter according to the present invention.

After various experiments we have ascertained that the increase in the operating voltage required as the frequency increases is caused by heat due to dielectric loss in the PLZT ceramic. This dielectric loss is expressed by $2\pi CV^2 f \tan \delta$, where $\tan \delta$ is the loss angle, V is the operating voltage, f is the operating frequency, and C is the capacitance between the electrodes. This dielectric loss becomes large as the frequency f becomes large. Due to this heating, the temperature of the PLZT ceramic body itself is raised to cause the operating voltage to be increased due to the temperature characteristic of the quadratic electro-optical coefficient R. As a result, when the electro-optical light shutter is operated at an operating frequency higher than 5 kHz in a colour television receiver formed by the combination of a monochromatic picture tube and the electro-optical light shutter, or in a high brightness projector as shown in Figure 2, the increase in the temperature of the PLZT ceramic increases the required operating power, with consequential problems.

The operating power P of the PLZT ceramic is given as:

$$P = CV^2 f + 2\pi CV^2 f \tan \delta \qquad (1)$$

Since:

$$V = \sqrt{\frac{\lambda \cdot d^2}{R \cdot n^3 \cdot t}}$$

and:

$$C = \varepsilon_o \cdot \varepsilon_s \cdot \frac{t \cdot l}{d}$$

$$P = \frac{\varepsilon_o \cdot \varepsilon_s \cdot \lambda \cdot d \cdot e \cdot f}{R \cdot n^3}(1 + 2\pi \tan \delta) \qquad (2)$$

where $\lambda$ is the wavelength, d is the distance between the pair of electrodes on the PLZT element, t is the thickness of the PLZT element, e is the length of the electrodes, n is the refractive index of the PLZT ceramic, R is the quadratic electro-optical coefficient, and $\varepsilon_s$ is the relative permittivity of the PLZT ceramic. In equation 2, when d, l, $\lambda$ and f are selected to be constant, it is desired that the coefficients R is as large as possible to enable the PLZT shutter to operate at a low operating voltage and with low power consumption.

In embodiments of electro-optical light shutter according to the present invention formed of electro-optical ceramic and at least a pair of electrodes through which A.C. voltage is applied to the electro-optical ceramic, for example, a PLZT ceramic, there are employed PLZT ceramics which have memory effect at room temperature and of which the memory effect is substantially lost at a constant elevated temperature caused by the application of the A.C. voltage.

If required, optical light shutter may additionally be provided with a heating means which holds the PLZT ceramic at the above constant elevated temperature.

We have discovered that in a PLZT ceramic having a composition which exhibits the memory effect at room temperature, the PLZT ceramic changes to exhibit the quadratic effect at a temperature higher than a critical temperature limit at which the memory effect is no longer exhibited (hereinafter this temperature is referred to as the memory temperature). Moreover, the quadratic electro-optical coefficient R has a large value at temperatures near the memory temperature. On the basis of the above discovery, the PLZT ceramic used for the electro-optical light shutter has a composition which exhibits the memory effect at room temperature and exhibits the quadratic effect at an elevated temperature resulting from heat generated by the A.C. voltage used to drive the shutter plus, possibly, external heating means provided to hold the PLZT ceramic at the elevated temperature. The PLZT ceramic is driven at the above condition where it has a high electro-optical coefficient R.

An embodiment of electro-optical light shutter according to the present invention will now be described. First, a method of forming the electro-optical ceramic body used therein will be described.

4

Raw materials for providing the PLZT ceramic having a desired composition are weighed, mixed by a ball mill at a revolution speed of 60 rpm for 15 hours, filtered, dried at 140°C for 15 hours and temporarily pressed under a pressure of 500 kg/cm². This temporarily pressed body is calcined at 900°C for 1 hour, then ground by a ball mill rotating at a revolution speed of 60 rpm for 15 hours, filtered again, dried at 140°C for 15 hours and then pressed under a pressure of 1t/cm². This product is hot pressed at 1250°C for 4 hours under a pressure of 200 kg/cm² in an oxygen atmosphere. The hot-pressed sintered product thus made is sliced into thin wafers, lapped on both surfaces and then mirror-finished.

Electrodes are deposited on the plate shaped PLZT ceramic body so formed. An example thereof is shown in Figures 8 and 9. In this example, the electrodes are deposited by a surface electrode method. On each of the major surfaces 6a and 6b of the PLZT plate 6 are deposited a pair of comb-tooth electrodes 4 and 5, the comb teeth of which alternate and are formed parallel to each other. A predetermined operating voltage is applied between the pair of electrodes 4 and 5. In this case, the electrodes 4 and 5 corresponding to each other on both the major surfaces 6a and 6b, and having the same polarity, are disposed in opposing relation thereto through the PLZT plate 6. The electrodes 4 and 5 are formed by a printing method employing silver paste or a metal vacuum deposition in which chromium is deposited to a thickness of 100 nm, and on which gold is further deposited to have a thickness of 400 nm. With the surface electrode method, in order to form a parallel electric field, it is desired that a spacing d between the electrodes 4 and 5 on the major surfaces 6a and 6b is increased, while the spacing between the major surfaces 6a and 6b, namely, the thickness t of the PLZT plate 6 is reduced.

The PLZT plate 6 is made to have a composition which exhibits the memory effect at room temperature as described before.

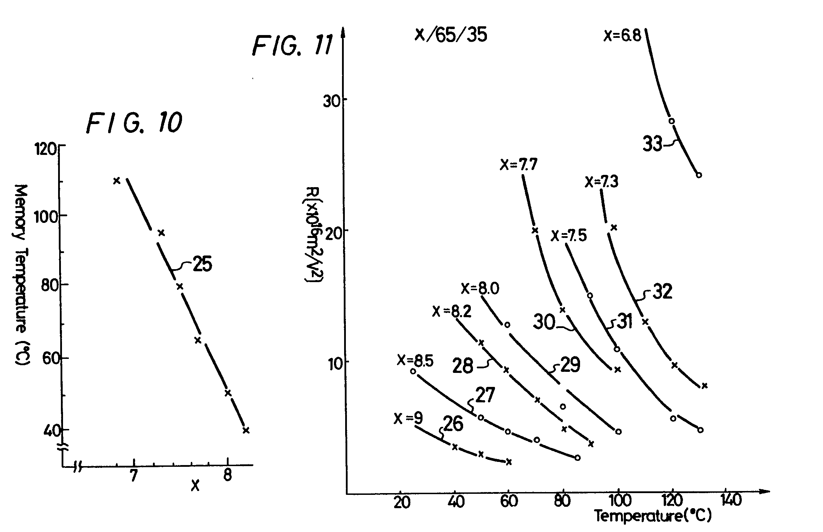

In the composition x/65/35 of the PLZT plate 6, the memory temperature of each composition in which the value x is changed was measured and the results thereof are shown by a curve 25 in Figure 10. It was confirmed that the memory effect was present in the temperature region below the curve 25 for each value of x, while the quadratic electro-optical effect was present in the region above the curve 25. In this case, the applied operating voltage is a DC voltage.

Further, in this PLZT ceramic, the measured results of the temperature characteristic of the electro-optical coefficient R for the PLZT ceramic having the composition of x/65/35 when the value of x is changed are shown in Figure 11. In Figure 11, curves 26 to 33 respectively represent the temperature characteristics of the electro-optical coefficient R at a temperature higher than room temperature in which $x=9$, $x=8.5$, $x=8.2$, $x=8.0$, $x=7.7$, $x=7.5$, $x=7.3$ and $x=6.8$. In this case, a helium-neon laser (whose wavelength is 633 nm) was used as the light source and the amount of light from the analyzer, with the construction as shown in Figure 1, was measured. In this case, the temperature at the left-hand end of each curve represents the memory temperature and a case where the contrast ratio indicates a value larger than 1/10 is regarded as a case which exhibits the memory effect. As will be clear from this graph, the electro-optical coefficient R indicates the larger value as the temperature becomes closer to the memory temperature.

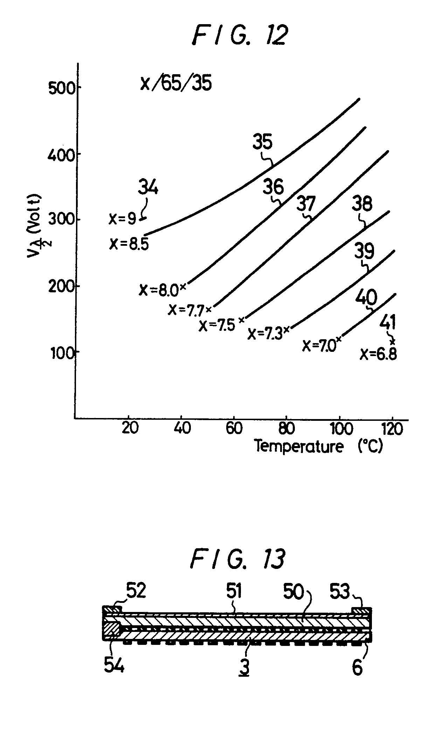

Similarly with the PLZT ceramic having the composition of x/65/35, the half-wave voltage $V\lambda/2$ versus the temperature of the PLZT plate 6 in the case where a similar helium-neon laser was used as the light source, and the electro-optical light shutter 3 was operated for approximately one second by applying AC voltage with square wave and a frequency of 5.25 kHz between the pair of comb tooth electrodes 4 and 5 shown in Figures 8 and 9 was measured. The measured results are indicated by a cross 41, and curves 34 to 40 in Figure 12. The cross 41 and curves 34 to 40 are respectively cases where $x=9$, $x=8.5$, $x=8.0$, $x=7.7$, $x=7.5$, $x=7.3$, $x=7.0$ and $x=6.8$. At temperatures lower than each cross point, the memory effect is exhibited, namely, the contrast ratio exceeds 1/10. In this case, the distance $L_1$ between the outer edges of the coupling portions of each comb tooth of the pair of comb tooth electrodes 4 and 5 is 9.6 mm, the distance $L_2$ between the inner edges thereof is 8.6 mm, the length $L_3$ between the tip ends of each comb tooth is 7.6 mm, the outside width $W_A$ of one electrode 4 is 7.6 mm and the outside width $W_B$ of the other electrode 5 is 6.6 mm. Moreover, in this case, the space d between the electrodes 4 and 5 is 430 microns, the comb tooth width W is 120 µm and the thickness t of the PLZT plate 6 is 300 µm. From Figure 12, the temperatures T of the PLZT plate 6 and the half-wave voltages $V\lambda/2$ are extracted and tabulated in the following Table 1.

# EP 0 117 604 B1

TABLE 1

| Sample number | (Composition x/y/z) | Half-wave voltage V$\lambda$/2 (volts) | | |
|---|---|---|---|---|
| | | T=60°C | T=80°C | T=100°C |
| No. 1 | (8.5/65/35) | 340 | 395 | 460 |
| No. 2 | (8.0/65/35) | 260 | 330 | 400 |
| No. 3 | (7.7/65/35) | 200 | 270 | 340 |
| No. 4 | (7.5/65/35) | memory | 200 | 260 |
| No. 5 | (7.3/65/35) | memory | 135 | 190 |
| No. 6 | (7.0/65/35) | memory | memory | 120 |
| No. 7 | (6.8/65/35) | memory | memory | memory |

From the above results, it is clear that if the PLZT temperature in the operational state of the electro-optical light shutter is determined, the optimum composition of PLZT ceramic for minimizing the half-wave voltage V$\lambda$/2 can be determined. For example, when the PLZT temperature is selected as 80°C, it is understood from Table 1 that the corresponding optimum composition is x/y/z=7.3/65/35 and the operating voltage is 135 V. If this is compared with the case of x/y/z=8.5/65/35, this composition requires the operating voltage of 395 V. Namely, in Table 1, as compared with the electro-optical light shutter employing the sample No. 1, the electro-optical light shutter employing the sample No. 5 can reduce the operating voltage to 1/3, and the operating power can be reduced to approximately 1/10. In this case, although generally the operating power is proportional to the square of the operating voltage, since, depending on each composition, the relative permittivity $\varepsilon_s$ and the dielectric loss angle $\delta$ differ with the temperature and operating voltage, it cannot simply be taken that the operating power is proportional to the square of the operating voltage.

Furthermore, there may be provided heating means which externally sets the temperature in the operation of the PLZT plate 6 at a predetermined temperature independent of the ambient temperature. That is:

(i) as the ambient temperature changes, the temperature of the PLZT ceramic body is changed;

(ii) when the operating voltage and the operating frequency are changed, the temperature of the PLZT ceramic body is changed; and

(iii) when the composition of the PLZT is changed, the half-wave voltage V$\lambda$/2 is changed and the operating voltage is changed so that the temperature of the PLZT ceramic body is also changed.

In consequence, when the PLZT temperature is changed for the reasons (i) to (iii), its quadratic electro-optical coefficient R is changed. To avoid this, the PLZT plate 6 is held at a constant temperature by the controlled heating means.

The PLZT temperatures of the samples Nos. 1, 2, 3, 4, 5, 6 each having the composition shown in Table 1 in which the ambient temperature is 25°C and the operating voltage is selected as 150 V and 200 V, without the heating means were measured. The measured results are shown in Table 2.

TABLE 2

| Sample number | PLZT Temperature T (°C) | |
|---|---|---|
| | At 150 volts | At 200 volts |
| No. 1 | 52 | 67 |
| No. 2 | 65 | 80 |
| No. 3 | 67 | 77 |
| No. 4 | 77 | 91 |
| No. 5 | 86 | 94 |
| No. 6 | 98 | 110 |

6

The optimum PLZT composition with an ambient room temperature (25°C) is determined by comparing the graph of Figure 12 and Table 2. Thus, the composition of the sample No. 5, namely, 7.3/65/35 is the best one. The temperature of the PLZT ceramic body having the composition of 7.3/65/35 at the operating voltage of 150 V is 86°C, and the half-wave voltage V$\lambda$/2 at 86°C becomes 150 V, which then corresponds to each other in Table 2 and the graph of Figure 12. While in this example the ambient temperature is made constant, the environment may actually fluctuate over at least −10°C to 40°, and this must be taken into consideration in a practical apparatus. With the environmental fluctuation, it is considered that in practice, the PLZT temperature ranges from 86°C−35°=51°C to 86°C+15°C=101°C. Since the memory temperature of the PLZT ceramic having the composition of 7.3/65/35 is 80°C, this PLZT ceramic exhibits the memory effect at an ambient temperature of −10°C and a PLZT temperature 51°C, so that the normal shutter operation cannot be achieved. Moreover, when the ambient temperature is 40°C and the PLZT temperature is 101°C, it is clear from the straight line 39 in Figure 12 that the operating voltage must be selected to be more than 175 V. In this way, as the operating voltage is increased, the PLZT temperature is also elevated, thus increasing the operating voltage more. As a result, as compared with the operating voltage of 150 V at the ambient temperature of 25°C, a large operating power is required by the elevated ambient temperature. For this reason, as the ambient temperature changes, the PLZT temperature is changed so that the operation of the electro-optical light shutter becomes impossible and the operating voltage therefor is greatly changed. And, in response to the change of the ambient temperature, the operating voltage is changed, so that it becomes necessary to temperature compensate the operating voltage in the driving circuit.

The influence of the ambient temperature can be avoided by the provision of the above-mentioned external heating means. Thus, a heating means is provided adjacent to but external to the PLZT plate 6 to hold it at a constant temperature. This external heating means can comprise a heater element and a temperature sensor which detects the temperature of the PLZT plate 6 and then controls the heater element to maintain the PLZT plate 6 at a predetermined temperature. By way of example, as, for example, shown in Figure 13, a transparent substrate 50 made of glass is bonded to the PLZT plate 6 on one surface by an adhesive agent and on the substrate 50 is deposited a transparent resistive layer, for example, of $SnO_2$. On one surface of the substrate 50 of, for example, 8×7×0.3 mm is deposited a heater 51 which is formed by a transparent resistive layer having resistivity of 25 ohms/square. Conductive terminals 52 and 53 are deposited at respective ends of the heater 51 and a voltage is applied across the terminals 52 and 53. On the other hand, a temperature detecting element 54 such as a thermistor is disposed in contact with the PLZT plate 6 and by a signal detected by the temperature detecting element 54, the power source circuit (not shown) for the heater 51 is controlled so as to maintain the PLZT plate 6 at a constant temperature, namely, a temperature higher than the memory temperature, for example, 120°C.

The above temperature detection can also be carried out using a capacitor formed by the PLZT ceramic per se, and the temperature is then detected by changes in the capacitance of the capacitor. In this case, a pair of electrodes are provided on the PLZT ceramic to form the capacitor, and the heater is controlled in response to the change of the capacitance of the capacitor. When, now, the composition of the PLZT plate 6 is 7.0/65/35, its operating voltage becomes 180 V at 120°C as is seen from the curve 40 in the graph of Figure 12. In this connection, when the PLZT ceramic is operated by the operating voltage of 180 V without the external heating, its PLZT temperature was 105°C at an ambient temperature of 25°C. However, in the PLZT ceramic providing with the above heating means, when the ambient temperature thereof is changed in a range from, for example, −10°C to 40°C, only the heater power which is required to hold the PLZT plate 6 at the temperature of, for example, 120°C is increased and/or decreased, but the PLZT temperature becomes constant. Thus, the operating voltage thereof becomes constant and the operating power of the PLZT plate 6 in that case becomes 1.5 W. In this case, the heater power was 0.5 W at an ambient temperature of 0°C and zero W at an ambient temperature of 40°C. In this connection, under the condition that the temperature is not controlled, the PLZT plate 6 having the composition of 7.3/65/35 requires a PLZT operating power of 1.5 W at an ambient temperature of 25°C and 2.3 W at an ambient temperature of 40°C. When the PLZT plate 6 having the composition of 8.5/65/35 was employed, the required PLZT operating power was 10.6 W at an ambient temperature of 25°C.

In the case of the above heating method employing the heater 51, it takes five seconds for the electro-optical light shutter to reach the temperature at which it starts operating as a shutter from room temperature and with an initial heater power of 2.5 W.

Thus the electro-optical light shutter described uses a PLZT ceramic body having a characteristic which exhibits the memory effect at room temperature but the quadratic effect at the operating temperature. In this way the operating voltage can be lowered. Moreover, when an external heating means is provided to hold the PLZT temperature constant independent of the ambient temperature, the operating voltage can be made constant and the start-up time of the electro-optical light shutter is reduced, and furthermore, the total power consumption of the shutter can be decreased.

Since the operating voltage of the PLZT shutter is lowered, the risk of discharge between the electrodes of the PLZT plate is reduced, the power of the PLZT electro-optical light shutter driving circuit can be reduced, the reliability thereof can be raised, and the manufacturing cost can be decreased.

Moreover, the noise level caused by the PLZT ceramic body can be decreased and the long-term reliability of the PLZT ceramic itself can be raised. Furthermore, owing to the reduction of the electric power, a battery can be used as the power source, so permitting use in portable apparatus.

## Claims

1. An electro-optical light shutter (3) comprising:

a PLZT ceramic body (6) exhibiting an electro-optical effect consisting in the dependency of the optical anisotropy of the body upon an electric field applied to the body;

means (4, 5) for applying an A.C. voltage to said ceramic body (6) to control said electro-optical effect in said ceramic body (6);

first polarizing means (1) to cause linearly polarized light to be incident on said ceramic body (6); and

second polarizing means (2) either to intercept or to transmit the light passed through said ceramic body (6);

characterised in that:

said ceramic body (6) is formed of a PLZT ceramic which has a memory effect resulting in the persistence of the anisotropy caused by an electric field after removal of the electric field at room temperature and which loses said memory effect and exhibits a quadratic electro-optical effect at a predetermined elevated operating temperature, and in that the means (4, 5) for applying the A.C. voltage is arranged to provide an A.C. voltage which results in heating of said ceramic body (6) to said elevated temperature.

2. An electro-optical light shutter (3) comprising:

a PLZT ceramic body (6) exhibiting an electro-optical effect consisting in the dependency of the optical anisotropy of the body upon an electric field applied to the body;

means (4, 5) for applying an A.C. voltage to said ceramic body (6) to control said electro-optical effect in said ceramic body (6);

first polarizing means (1) to cause linearly polarized light to be incident on said ceramic body (6); and

second polarizing means (2) either to intercept or to transmit the light passed through said ceramic body (6);

characterised by:

means (4, 5, 51) for holding said ceramic body (6) at a predetermined elevated operating temperature;

said ceramic body (6) being formed of a PLZT ceramic which has a memory effect at room temperature and which loses said memory effect and exhibits a quadratic electro-optical effect at said predetermined elevated operating temperature;

said means (4, 5, 51) for holding said ceramic body (6) at said predetermined elevated operating temperature comprising said means (4, 5) for applying said A.C. voltage and additional separately controlled heating means (51).

3. A shutter (3) according to claim 1 or claim 2 wherein said first and second polarizing means (1, 2) comprise respectively a polarizer (1) and an analyzer (2) arranged in crossed-nicols condition.

4. A shutter (3) according to claim 1, claim 2 or claim 3 wherein said means (4, 5) to apply an A.C. voltage to said body (6) comprises a pair of electrodes (4, 5).

5. A shutter (3) according to any one of the preceding claims wherein said heating means (51) is a heater (51) disposed adjacent to said ceramic body (6).

6. A shutter (3) according to claim 5 wherein said heater (51) is made of transparent resistive material.

7. A shutter (3) according to any one of the preceding claims wherein said PLZT ceramic is:

$$(Pb_{(1-x)}La_x)((Zr_yTi_z)_{(1-x/4)})O_3$$

## Patentansprüche

1. Elektrooptischer Lichtstrahler (3) mit

einem PLZT-Keramikkörper (6), der einen elektrooptischen Effekt zeigt, welcher in der Abhängigkeit der optischen Anisotropie des Körpers von einem an den Körper angelegten elektrischen Feld besteht,

einer Einrichtung (4, 5) zum Anlegen einer Wechselspannung an den Keramikkörper (6) zum Steuern des elektrooptischen Effekts in dem Keramikkörper (6),

einer ersten Polarisierungseinrichtung (1), um zu Bewirken, daß polarisiertes Licht auf den Keramikkörper (6) einfällt,

einer zweiten Polarisierungseinrichtung (2) zum Unterbrechen oder Weiterleiten des durch den Keramikkörper (6) hindurchgegangenen Lichts,

dadurch gekennzeichnet, daß

der Keramikkörper (6) aus einer PLZT-Keramik gebildet ist, die bei Raumtemperatur einen in der Fortdauer der durch ein elektrisches Feld bewirkten Anisotropie nach der Entfernung des elektrischen Feldes resultierenden Speichereffekt aufweist und bei einer vorbestimmten erhöhten Betriebstemperatur den Speichereffekt verliert und einen quadratischen elektrooptischen Effekt zeigt, wobei die Einrichtung (4, 5) zum Anlegen der Wechselspannung eine Wechselspannung erzeugt, die eine Erwärmung des Keramikkörpers (6) auf die erhöhte Temperatur zur Folge hat.

## EP 0 117 604 B1

2. Elektrooptischer Lichtschalter (3) mit

einem PLZT-Keramikkörper (6), der einen elektrooptischen Effekt zeigt, welcher in der Abhängigkeit der optischen Anisotropie des Körpers von einem an den Körper angelegten elektrischen Feld besteht,

einer Einrichtung (4, 5) zum Anlegen einer Wechselspannung an den Keramikkörper (6) zum Steuern des elektrooptischen Effekts in dem Keramikkörper (6),

einer ersten Polarisierungseinrichtung (1), um zu Bewirken, daß polarisiertes Licht auf den Keramikkörper (6) einfällt,

einer zweiten Polarisierungseinrichtung (2) zum Unterbrechen oder Weiterleiten des durch den Keramikkörper (6) hindurchgegangenen Lichts,

gekennzeichnet durch

eine Einrichtung (4, 5, 51) zum Halten des Keramikkörpers (6) auf einer vorbestimmten erhöhten Betriebstemperatur,

wobei der Keramikkörper (6) aus einer PLZT-Keramik gebildet ist, die bei Raumtemperatur einen Speichereffekt aufweist und bei der vorbestimmten erhöhten Betriebstemperatur den Speichereffekt verliert und einen quadratischen elektrooptischen Effekt zeigt,

wobei die Einrichtung (4, 5, 51) zum Halten des Keramikkörpers (6) auf der vorbestimmten erhöhten Betriebstemperatur die Einrichtung (4, 5) zum Anlegen der Wechselspannung und zusätzlich eine separat gesteuerte Heizeinrichtung (51) aufweist.

3. Schalter (3) nach Anspruch 1 oder 2, wobei die erste und zweite Polarisierungseinrichtung (1, 2) jeweils einen Polarisator (1) und Analysator (2) aufweisen, die in einem Zustand gekreuzter Nicols angeordnet sind.

4. Schalter (3) nach Anspruch 1, 2 oder 3, wobei die Einrichtung (4, 5) zum Anlegen einer Wechselspannung an den Körper (6) ein Paar Elektroden (4, 5) aufweist.

5. Schalter (3) nach einem der vorhergehenden Ansprüche, wobei die Heizeinrichtung (51) ein an dem Keramikkörper (6) angeordneter Heizkörper (51) ist.

6. Schalter (3) nach Anspruch 5, wobei der Heizkörper (51) aus einem transparenten Widerstandsmaterial gebildet ist.

7. Schalter (3) nach einem der vorhergehenden Ansprüche, wobei die PLZT-Keramik aus

$$(Pb_{(1-x)}La_x)((Zr_yTi_z)_{(1-x/4)})O_3$$

besteht.

## Revendications

1. Obturateur électro-optique de lumière (3) comprenant:

un corps céramique (6) de PLZT présentant un effet électro-optique constitué par la variation de l'anisotropie optique du corps avec un champ électrique appliqué au corps,

un dispositif (4, 5) destiné à appliquer une tension alternative au corps céramique (6) afin que l'effet électro-optique dans le corps (6) soit réglé,

un premier dispositif polarisant (1) destiné à provoquer l'application de lumière polarisée linéairement au corps céramique (6), et

un second dispositif polarisant (2) destiné à intercepter ou à transmettre la lumière transmise par le corps céramique (6),

caractérisé en ce que

le corps céramique (6) est formé d'une céramique de PLZT qui, à température ambiante, a un effet de mémoire correspondant à la persistance de l'anisotropie provoquée par le champ électrique après suppression du champ électrique, et qui perd son effet de mémoire et présente un effet électro-optique quadratique à une température élevée prédéterminée de fonctionnement, et en ce que le dispositif (4, 5) destiné à appliquer la tension alternative est destiné à transmettre une tension alternative qui provoque le chauffage du corps céramique (6) à la température élevée.

2. Obturateur électro-optique de lumière (3) comprenant:

un corps céramique (6) de PLZT présentant un effet électro-optique constitué par la variation de l'anisotropie optique du corps avec un champ électrique appliqué au corps,

un dispositif (4, 5) destiné à appliquer une tension alternative au corps céramique (6) afin que l'effet électro-optique dans le corps (6) soit réglé,

un premier dispositif polarisant (1) destiné à provoquer l'application de lumière polarisée linéairement au corps céramique (6), et

un second dispositif polarisant (2) destiné à intercepter ou à transmettre la lumière transmise par le corps céramique (6),

caractérisé par

un dispositif (4, 5, 51) destiné à maintenir le corps céramique (6) à une température élevée prédéterminée de fonctionnement,

le corps céramique (6) étant formé d'une céramique de PLZT qui a un effet de mémoire à température ambiante et qui perd cet effet de mémoire et présente un effet électro-optique quadratique à la température élevée prédéterminée de fonctionnement,

le dispositif (4, 5, 51) de maintien du corps céramique (6) à la température élevée prédéterminée de fonctionnement comportant le dispositif (4, 5) d'application de la tension alternative et un dispositif supplémentaire (51) de chauffage, commandé séparément.

3. Obturateur (3) selon la revendication 1 ou 2, dans lequel le premier et le second dispositif polarisant (1, 2) comprennent respectivement un polariseur (1) et un analyseur (2) disposés sous forme de prismes de Nicol croisés.

4. Obturateur (3) selon la revendication 1, 2 ou 3, dans lequel le dispositif (4, 5) destiné à appliquer une tension alternative au corps (6) comporte deux électrodes (4, 5).

5. Obturateur (3) selon l'une quelconque des revendications précédentes, dans lequel le dispositif de chauffage (51) est un élément de chauffage (51) placé près du corps céramique (6).

6. Obturateur (3) selon la revendication 5, dans lequel l'élément de chauffage (51) est formé d'une matière résistive transparente.

7. Obturateur (3) selon l'une quelconque des revendications précédentes, dans lequel la céramique de PLZT a la formule:

$$(Pb_{(1-x)}La_x)((Zr_yTi_z)_{(1-x/4)})O_3$$

EP 0 117 604 B1

FIG. 1

FIG. 2

1

FIG. 3

x/y/z =12/40/60

$\Delta n \ (\times 10^3)$

5

−15   0   15

E(KV/cm)

FIG. 4

x/y/z=9/65/35

$\Delta n (\times 10^3)$

5

−10   0   10

E(KV/cm)

FIG. 5

x/y/z=8/65/35

$\Delta n \ (\times 10^3)$

5

−10   0   10

E(KV/cm)

2

FIG. 6

FIG. 7

FIG. 8

FIG. 9

3

FIG. 11

FIG. 10

x/65/35

EP 0 117 604 B1

## F I G. 12

## F I G. 13